# FASCICULE DE BREVET EUROPEEN

(11) **EP 2 517 984 B1**
(45) Date de publication et mention de la délivrance du brevet: **02.09.2015**
(21) Numéro de dépôt: 12165087.3
(22) Date de dépôt: 23.04.2012
(51) Int. Cl.: B65G 5/00

(54) **Système destiné au stockage de gaz dans une cavité et procédé mettant en oeuvre un tel système**
System zur Lagerung von Gas in einem Hohlraum, und Verfahren, bei dem dieses System angewandt wird
System for storing of gas in a cavity and method using such a system

(30) Priorité: 27.04.2011 FR 1153602
(43) Date de publication de la demande: 31.10.2012
(73) Titulaire: Storengy, 92270 Bois Colombes (FR)
(72) Inventeur: Devilleger, Denis, 78770 Marcq (FR); Rousse, Romain, 78460 Chevreuse (FR)
(74) Mandataire: Thinat, Michel

(56) Documents cités:
- LAGUERIE DE P: "LE COMPLEXE DE STOCKAG EN CAVITES SALINES DE MANOSQUE", INDUSTRIE MINERALE - MINES ET CARRIERES, EDITIONS GEDIM. ST ETIENNE, FR, vol. 76, 1 octobre 1994 (1994-10-01), pages 67-71, XP000606726, ISSN: 0994-2556

## Description

La présente invention concerne un système destiné au stockage de gaz dans une cavité, notamment muni d'un tube de protection dans la cheminée d'un puits menant à ladite cavité.

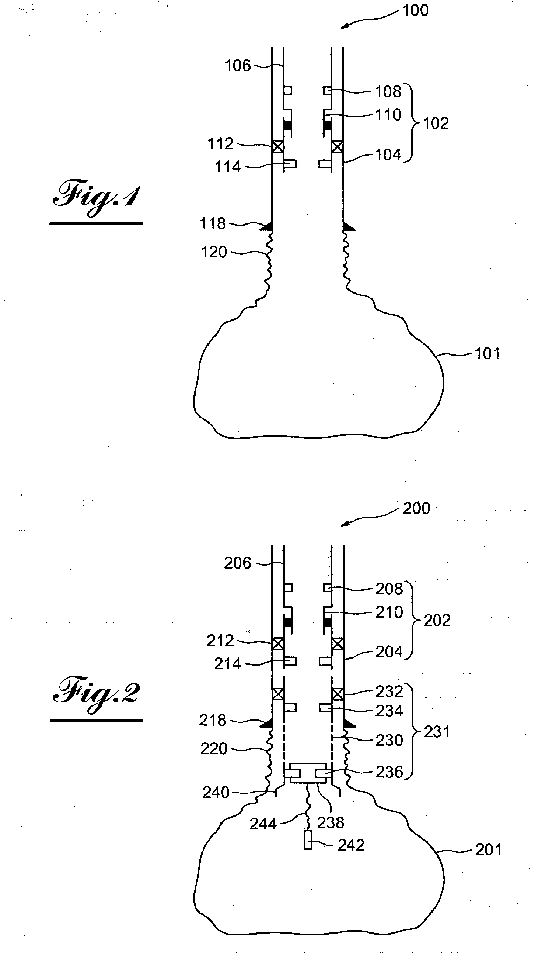

En référence à la figure 1, il est connu de forer un puits 100 dans un milieu salin pour stocker un gaz sous pression dans une cavité 101 dudit milieu. Typiquement, un tel puits 100 comprend une base 102 munie d'un tubage 104 cimenté formant une paroi extérieure pour le puits 100 et à l'intérieur de laquelle est introduit un tube 106 de production.

Ce tube 106 de production permet la récupération de gaz stocké dans la cavité 101 en l'acheminant jusqu'à la surface (non représentée). Le tube 106 de production permet également de maintenir le gaz stocké dans la cavité 101 lorsqu'il est équipé d'un bouchon (non représenté) au niveau d'un siège 108 supérieur.

Afin de maintenir l'étanchéité de la cavité 101 malgré d'éventuels allongements ou raccourcissements du tube 106 de production, ce dernier est associé à un système 110 d'étanchéité coulissant, couramment dénommé « locator » en utilisant une expression en anglais, emboîté dans un obturateur annulaire 112, couramment dénommé « packer » en utilisant l'anglais, ancré dans le tubage cimenté 104.

Le puits 100 peut être muni d'un second siège 114 inférieur visant notamment à permettre l'isolation de la cavité 101 et l'ancrage de l'obturateur annulaire 112 dans le tubage cimenté 104.

Le tubage cimenté 104 est délimité en son extrémité inférieure par un sabot annulaire 118 au-delà duquel la paroi du puits 100 est dépourvu de protection et est formée par le matériau dans lequel est situé la cavité 101, cette partie du puits étant dénommée la cheminée 120.

La présente invention comprend la constatation qu'un tel aménagement d'un puits de stockage de gaz provoque de nombreux problèmes qui se révèlent après de longues périodes, typiquement de plusieurs années.

Un premier problème est lié à une possible dégradation de la paroi de la cheminée 120 au cours du temps, par exemple sous l'effet de déplacements de terrains, pouvant s'accompagner de chutes de matériaux tels que des blocs d'insolubles ou de sel.

Cette dégradation peut empêcher le libre passage d'outils qui doivent descendre dans la cavité afin de réaliser des mesures obligatoires pour suivre d'éventuelles évolutions de la cavité, par exemple au moyen d'outils de contrôle de volume (échométrie) ou de profondeur, ces mesures étant mises en oeuvre, respectivement, au moins tous les 10 ans ou tous les 2 à 3 ans.

Un second problème a été constaté lors d'autres mesures, non réglementaires, de pressions et températures dans la cavité 101 qui visent à optimiser les performances de stockage. Dans le cadre de ces mesures, une sonde enregistrant la pression et la température dans la cavité 101 est accrochée au bout d'un câble relié à un bouchon au niveau du second siège 114 inférieur.

Des pertes de ces sondes, qui restent suspendues pendant plusieurs mois dans la cavité 101, ont été constatées suite à la rupture du câble de suspension due aux frottements du câble contre la paroi de la cheminée 120.

De plus, en période de production, la mise en oeuvre d'un tel bouchon associé à une sonde entraîne des pertes de charges nonobstant le fait que le bouchon soit ajouré pour laisser passer du gaz.

Un dernier problème apparaît lors du premier remplissage en gaz de la caverne 101 au moyen d'un tube plongeur mis en place à l'intérieur du tube de production 106, ce tube plongeur descendant jusqu'au point le plus bas de la cavité 101.

De fait, le premier remplissage en gaz est effectué en poussant ce gaz au travers de l'annulaire formé, d'une part, par le tube de production et, d'autre part, par le tube plongeur, ce qui provoque la remontée en surface de saumure initialement présente dans la cavité saline via le tube plongeur.

Lors de cette phase, il arrive que le tube plongeur soit endommagé par des blocs chutant depuis la cheminée 120 vers la cavité 101.

Afin de résoudre au moins un des problèmes précédemment cités, la présente invention concerne un système destiné au stockage d'un gaz dans une cavité accessible via un puits présentant une base munie d'un tubage cimenté formant une paroi extérieure du puits à l'intérieure de laquelle est introduit un tube de production et un système d'étanchéité dédié audit tube de production afin de guider le gaz entre, d'une part, la surface et, d'autre part, une cheminée située à l'entrée de la cavité et dépourvue du tubage cimenté, **caractérisé en ce qu'**un tube de protection est fixé au tubage cimenté de façon à être maintenu dans la cheminée indépendamment du tube de production et de son système d'étanchéité dédié.

Dans un tel système, le tube de protection - pouvant également être dénommé tube de queue ou « tail pipe » en utilisant une expression en anglais - assure le passage des outils jusqu'à la cavité de stockage du gaz au travers de la cheminée, de façon similaire à un grillage.

Ainsi, les différents éléments introduits dans la cavité (outils de mesure ou tube plongeur) sont à l'abri des chutes de blocs et des mouvements de terrain dans la cheminée.

De plus, le tube de protection limite naturellement les frottements des câbles introduits dans la cavité contre le rebord de la cheminée de telle sorte que la rupture desdits câbles par frottements est évitée.

Dans une réalisation, le tube de protection est ajouré de façon à permettre le passage de gaz entre l'intérieur et l'extérieur du tube de protection dans la cheminée.

Selon une réalisation, le tube de protection présente au moins un siège permettant d'isoler la cavité et/ou de maintenir des instruments dans cette cavité.

Dans une réalisation, le tube de protection présente un siège supérieur et un siège inférieur situé de part et d'autre des jours du tube de protection de telle sorte que le siège supérieur permet d'isoler la cavité au moyen d'un bouchon tandis que le siège inférieur permet de maintenir des outils de mesure dans la cavité.

Dans une réalisation, le siège inférieur maintient les outils de mesure au moyen d'un bouchon.

Selon une réalisation, le tube de protection est muni d'un cône d'introduction élargissant l'ouverture du tube de protection vis-à-vis de la cavité afin de guider les outils de mesure lors de leurs remontées et d'éviter ainsi la rupture d'un câble de manoeuvre.

Dans une réalisation, le tube de protection est dans le prolongement du tube de production.

Selon une réalisation, le tube de protection est associé à des moyens d'étanchéités comprenant un obturateur annulaire muni de joints en élastomère.

L'invention concerne également un procédé de mise en oeuvre d'un système de stockage et de production de gaz à partir d'une cavité accessible via un puits présentant une base munie d'un tubage cimenté formant une paroi extérieure du puits à l'intérieure de laquelle est introduit un tube de production et un système d'étanchéité dédié audit tube de production afin de guider le gaz entre, d'une part, la surface et, d'autre part, une cheminée située à l'entrée de la cavité et dépourvue du tubage cimenté, **caractérisé en ce qu'**il comprend l'étape d'introduire un tube de protection puis de le fixer au tubage cimenté de façon à maintenir ledit tube de protection dans la cheminée indépendamment du tube de production et de son système d'étanchéité dédié.

Dans une réalisation, le procédé comprend l'étape de tester le système d'étanchéité dédié du tube de production lors de l'installation dudit tube de production en générant une surpression entre le tube de protection et le tube de production à l'aide d'un siège supérieur et de moyens d'étanchéités du tube de protection.

Selon une réalisation, le procédé comprend l'étape de protéger un tube plongeur, également dénommé tube de « dewatering » selon une expression en anglais, introduit dans le puits pour remplir la cavité en gaz, au moyen du tube de protection.

L'invention sera mieux comprise à la lumière de la description effectuée ci-dessous, à titre illustratif et non limitatif, en référence aux figures ci-jointes sur lesquelles:
- la figure 1, déjà décrite, est une représentation schématique d'un puits de stockage de gaz selon l'art antérieur et
- la figure 2 est une représentation schématique d'un puits de stockage de gaz selon l'invention.

En référence à la figure 2 est représenté un puits 200 de stockage de gaz sous pression dans une cavité 201, typiquement située dans un milieu salin à une profondeur généralement comprise entre 1000 et 1500 m, des profondeurs distinctes pouvant être néanmoins considérées pour mettre en oeuvre l'invention. Conformément à l'art antérieur, un tel puits 200 comprend une base 202 munie d'un tubage 204 cimenté formant une paroi extérieure du puits 200 à l'intérieur de laquelle est introduit un tube 206 de production.

Comme déjà indiqué, ce tube 206 de production permet la récupération du gaz stocké dans la cavité 201 ou le maintien dudit gaz stocké dans ladite cavité 201 lorsqu'il est équipé d'un bouchon (non représenté) au niveau d'un premier siège 208 dédié.

Afin de maintenir l'étanchéité de la cavité 201, le tube 206 de production est associé à un système 210 d'étanchéité emboîté dans un obturateur annulaire 212 ancré dans le tubage cimenté 204, un tel système étant coulissant afin de permettre des déplacements du tube 206 de production.

Le puits 200 est également muni d'un second siège 214 visant à permettre l'isolation de la cavité 201 et l'ancrage de l'obturateur annulaire 212 dans le tubage cimenté 204 délimité, en son extrémité inférieure, par un sabot annulaire 218 au-delà duquel est située une cheminée 220.

Conformément à l'invention, cette cheminée 220 est munie d'un tube 230 de protection, ou couramment dénommé « tail pipe » en utilisant l'anglais, fixé au tubage cimenté 204 grâce à un système d'ancrage 232 étanche formant un ensemble 231 de protection.

Ainsi, un tel tube 230 de protection assure le passage des outils jusqu'à la cavité de stockage du gaz au travers de la cheminée et met à l'abri les différents éléments introduits dans la cavité (outils de mesure ou tube plongeur) vis-à-vis des chutes de blocs et des mouvements de terrain.

A l'intérieur de ce tube 230 de protection, un siège 234 supérieur et/ou un siège 236 inférieur peuvent être mis en oeuvre pour effectuer différentes opérations comme l'isolation de la cavité 201 ou le maintien d'instruments dans cette cavité 201.

Plus précisément, le siège 236 inférieur permet d'installer un bouchon 238 pourvu de sondes 242 à mémoire stockant des mesures de pression et température dans la cavité 201. Afin de sécuriser leurs agencements et éviter leurs pertes dans la cavité 201, ces sondes 242 sont vissées directement sur le bouchon 238 ou suspendues au bout d'un câble 244 situé à l'abri des frottements contre la paroi de la cheminée 220.

Le siège 234 supérieur peut également recevoir un bouchon afin d'isoler la cavité 201, éventuellement en combinaison avec un bouchon situé sur le siège 214. Dans ce dernier cas, il est possible d'envisager le changement complet de l'équipement de production dans le puits en cas de défaillance des éléments de la complétion puisque le puits se trouve alors pourvu de deux barrières mécaniques et d'une barrière hydraulique.

En d'autres termes, il est possible de remonter le tube de production 206 en déboitant son système d'étanchéité 210 de l'obturateur annulaire 212 sans purger le gaz de la cavité 201.

De fait, il convient de noter que le tube de protection 230 est indépendant du tube de production 206 qui est libre d'effectuer de faibles déplacements (de l'ordre de quelques centimètres) dans le puits grâce à son système d'étanchéité coulissant 210. Ainsi les mouvements de terrain de la cheminée 220 n'ont pas d'impact sur ces éléments.

L'installation d'un tube 230 de protection dans le puits 200 peut être effectuée lors de la complétion, c'est-à-dire de l'installation du puits, à l'aide de tiges de travail et d'un appareil de forage. Lors de cette installation, il est possible de minimiser la distance comprise entre le siège 214 et le système 232 d'ancrage de l'obturateur annulaire afin de guider les outils de mesure lors de leurs descentes dans la cavité 201.

Pour optimiser ce guidage en sortie du tube 230 de protection, un cône d'introduction 240 est positionné sur le tube 230 en vis-à-vis de la cavité 201, ce qui facilite la remontée des outils et évite une rupture du câble 244 lors des opérations de mesures dans la cavité 201 par frottement sur la paroi de la cheminée 220.

La présente invention est susceptible de nombreuses variantes. Par exemple, l'obturateur annulaire 232 peut être muni de joints en élastomère afin d'assurer l'étanchéité du système de protection 231.

Par ailleurs, lors de l'installation du tube 206 de production, il est possible de tester son système d'étanchéité 210 en générant une surpression entre le tube de protection 230 et le tube de production 206 à l'aide du siège supérieur 234 et de moyens d'étanchéités 232 du tube 230 de protection.

De fait, ce siège supérieur 234 peut être bouché pour permettre une surpression de la cavité vers la surface du puits, ce qui permet de tester l'étanchéité du puits dans les conditions de fonctionnement.

Finalement, il convient de noter que, dans cette réalisation, le tube 230 de protection est ajouré afin de permettre le passage de gaz si le puits fonctionne en production de gaz et qu'un bouchon 238 est en place dans le siège 236 inférieur pour maintenir des outils de mesure dans la cavité 201.

## Revendications

1. Système destiné au stockage d'un gaz dans une cavité (201) accessible via un puits (200) présentant une base (202) munie d'un tubage (204) cimenté formant une paroi extérieure du puits (200) à l'intérieure de laquelle est introduit un tube de production (206) et un système d'étanchéité dédié (210, 212) audit tube de production afin de guider le gaz entre, d'une part, la surface et, d'autre part, une cheminée (220) située à l'entrée de la cavité (201) et dépourvue du tubage cimenté (204), **caractérisé en ce qu'**un tube de protection (230) est fixé au tubage cimenté (204) de façon à être maintenu dans la cheminée (220) indépendamment du tube (206) de production et de son système d'étanchéité dédié (210, 212).

2. Système selon la revendication 1 **caractérisé en ce que** le tube de protection (230) est ajouré de façon à permettre le passage de gaz entre l'intérieur et l'extérieur du tube de protection (230) dans la cheminée (220).

3. Système selon la revendication 1 ou la revendication 2 **caractérisé en ce que** le tube de protection (230) présente au moins un siège (234, 236) permettant d'isoler la cavité (201) et/ou de maintenir des instruments (242, 244) dans cette cavité (201).

4. Système selon les revendications 2 et 3 **caractérisé en ce que** le tube de protection (230) présente un siège supérieur (234) et un siège inférieur (236) situé de part et d'autre des jours du tube de protection (230) de sorte que le siège supérieur (234) permet d'isoler la cavité (201) au moyen d'un bouchon tandis que le siège inférieur (236) permet de maintenir des outils (242, 244) de mesures dans la cavité (201).

5. Système selon la revendication 4 **caractérisé en ce que** le siège inférieur (236) maintient les outils (242, 244) de mesures au moyen d'un bouchon (238).

6. Système selon l'une des revendications précédentes **caractérisé en ce que** le tube de protection (230) est muni d'un cône d'introduction (240) élargissant l'ouverture du tube de protection (230) vis-à-vis de la cavité (201).

7. Système selon l'une des revendications précédentes **caractérisé en ce que** le tube de protection (230) est dans le prolongement du tube de production (206).

8. Système selon l'une des revendications précédentes **caractérisé en ce que** le tube de protection (230) est associé à des moyens d'étanchéités comprenant un obturateur annulaire (232) muni de joints en élastomère.

9. Procédé de mise en oeuvre d'un système de stockage et de production de gaz à partir d'une cavité (201) accessible via un puits (200) présentant une base (202) munie d'un tubage (204) cimenté formant une paroi extérieure du puits (200) à l'intérieur de laquelle est introduit un tube de production (206) et un système d'étanchéité dédié (210, 212) audit tube de production afin de guider le gaz entre, d'une part, la surface et, d'autre part, une cheminée (220) située à l'entrée de la cavité (201) et dépourvue du tubage cimenté (204), **caractérisé en ce qu'**il comprend l'étape d'introduire un tube de protection (230) puis de le fixer au tubage cimenté (204) de façon à maintenir ledit tube de protection (230) dans la cheminée (220) indépendamment du tube de production (206) et de son système d'étanchéité dédié (210, 212).

10. Procédé selon la revendication 9, **caractérisé en ce qu'**il comprend l'étape de tester le système d'étanchéité dédié (210, 212) du tube de production lors de l'installation dudit tube de production en générant une surpression entre le tube de protection (230) et le tube de production (206) à l'aide d'un siège supérieur (234) et de moyens d'étanchéités (232) du tube de protection (230).

11. Procédé selon l'une des revendications 9 ou 10 **caractérisé en ce qu'**il comprend l'étape de protéger un tube plongeur, introduit dans le puits (200) pour remplir la cavité (201) en gaz, au moyen du tube de protection (230).

## Patentansprüche

1. System zur Lagerung eines Gases in einem Hohlraum (201), der über einen Schacht (200) erreichbar ist, der eine Basis (202) aufweist, die mit einer zementierten Verrohrung (204) ausgestattet ist, die eine Außenwand des Schachts (200) bildet, in die ein Produktionsrohr (206) und ein spezielles Dichtungssystem (210, 212) des Produktionsrohrs eingeführt ist, um das Gas zwischen einerseits der Oberfläche und andererseits einem Kamin (220) am Eingang des Hohlraums (201) ohne zementierte Verrohrung (204) zu lenken, **dadurch gekennzeichnet, dass** ein Schutzrohr (230) an der zementierten Verrohrung (204) derart befestigt ist, dass es im Kamin (220) unabhängig vom Produktionsrohr (206) und seinem speziellen Dichtungssystem (210, 212) gehalten wird.

2. System nach Anspruch 1, **dadurch gekennzeichnet, dass** das Schutzrohr (230) derart durchbrochen ist, dass der Durchgang von Gas zwischen dem Innern und dem Äußern des Schutzrohrs (230) in den Kamin (220) gestattet ist.

3. System nach Anspruch 1 oder Anspruch 2, **dadurch gekennzeichnet, dass** das Schutzrohr (230) mindestens einen Sitz (234, 236) aufweist, der erlaubt, den Hohlraum (201) zu isolieren und/oder Instrumente (242, 244) in diesem Hohlraum (201) zu halten.

4. System nach den Ansprüchen 2 und 3, **dadurch gekennzeichnet, dass** das Schutzrohr (230) einen oberen Sitz (234) und einen unteren Sitz (236) aufweist, derart auf der einen und der anderen Seite der Öffnungen des Schutzrohrs (230) gelegen, dass der obere Sitz (234) die Isolation des Hohlraums (201) mit einem Verschluss erlaubt, wogegen der untere Sitz (236) erlaubt, Messwerkzeuge (242, 244) im Hohlraum (201) zu halten.

5. System nach Anspruch 4, **dadurch gekennzeichnet, dass** der untere Sitz (236) die Messwerkzeuge (242, 244) mittels eines Verschlusses (238) hält.

6. System nach einem der vorangehenden Ansprüche, **dadurch gekennzeichnet, dass** das Schutzrohr (230) mit einem Eingangskonus (240) ausgestattet ist, der die Öffnung des Schutzrohrs (230) gegenüber dem Hohlraum (201) erweitert.

7. System nach einem der vorangehenden Ansprüche, **dadurch gekennzeichnet, dass** das Schutzrohr (230) in der Verlängerung des Produktionsrohrs (206) ist.

8. System nach einem der vorangehenden Ansprüche, **dadurch gekennzeichnet, dass** das Schutzrohr (230) mit Dichtungsmitteln verbunden ist, die eine Ringblende (232) mit Elastomerdichtungen umfassen.

9. Verfahren für die Umsetzung eines Systems zur Lagerung und Produktion von Gas in einem Hohlraum (201), der über einen Schacht (200) erreichbar ist, der eine Basis (202) aufweist, die mit einer zementierten Verrohrung (204) ausgestattet ist, die eine Außenwand des Schachts (200) bildet, in die ein Produktionsrohr (206) und ein spezielles Dichtungssystem (210, 212) des Produktionsrohrs eingeführt ist, um das Gas zwischen einerseits der Oberfläche und andererseits einem Kamin (220) am Eingang des Hohlraums (201) ohne zementierte Verrohrung (204) zu lenken, **dadurch gekennzeichnet, dass** es den Schritt des Einführens eines Schutzrohrs (230), gefolgt von seiner Befestigung an der zementierten Verrohrung (204) derart, dass das Schutzrohr (230) im Kamin (220) unabhängig vom Produktionsrohr (206) und seines speziellen Dichtungssystems (210, 212) gehalten wird, umfasst.

10. Verfahren nach Anspruch 9, **dadurch gekennzeichnet, dass** es den Schritt des Testens des speziellen Dichtungssystems (210, 212) des Produktionsrohrs bei der Installation des Produktionsrohrs durch Erzeugen eines Überdrucks zwischen dem Schutzrohr (230) und dem Produktionsrohr (206) mit Hilfe eines oberen Sitzes (234) und Dichtungsmitteln (232) des Schutzrohrs (230) umfasst.

11. Verfahren nach einem der Ansprüche 9 oder 10, **dadurch gekennzeichnet, dass** es den Schritt des Schützens eines in den Schacht (200) zum Füllen des Hohlraums (201) mit Gas eingeführten Tauchrohrs mittels des Schutzrohrs (230) umfasst.

## Claims

1. A system for storing a gas in a cavity (201) accessible via a well (200) having a base (202) provided with a cemented tubing (204) forming an outer wall of the well (200) inside which a production tube (206) and a dedicated sealing system (210, 212) of said production tube are inserted so as to guide the gas between the surface on the one hand, and a chimney (220) situated at the inlet of the cavity (201) and with no cemented tubing (204) on the other hand, **characterized in that** a protective tube (230)is fastened to the cemented tubing (204) so as to be maintained in the chimney (220) independently of the production tube (206) and its dedicated sealing system (210, 212).

2. The system according to claim 1, **characterized in that** the protective tube (230) is open-worked so as to allow the passage of gas between the inside and the outside of the protective tube (230) in the chimney (220).

3. The system according to claim 1 or claim 2, **characterized in that** the protective tube (230) has at least one seat (234, 236) making it possible to isolate the cavity (201) and/or to maintain instruments (242, 244) **in that** cavity (201).

4. The system according to claims 2 and 3, **characterized in that** the protective tube (230) has an upper seat (234) and a lower seat (236) situated on either side of the openings of the protective tube (230) such that the upper seat (234) makes it possible to isolate the cavity (201) using a stopper while the lower seat (236) makes it possible to maintain measuring tools (242, 244) in the cavity (201).

5. The system according to claim 4, **characterized in that** the lower seat (236) maintains the measuring tools (242, 244) using a stopper (238).

6. The system according to one of the preceding claims, **characterized in that** the protective tube (230) is provided with an insertion cone (240) widening the opening of the protective tube (230) with respect to the cavity (201).

7. The system according to one of the preceding claims, **characterized in that** the protective tube (230) is in the extension of the production tube (206).

8. The system according to one of the preceding claims, **characterized in that** the protective tube (230) is associated with sealing means comprising an annular closing member (232) provided with elastomer seals.

9. A method for implementing a gas storage and production system from a cavity (201) accessible via a well (200) having a base (202) provided with a cemented tubing (204) forming an outer wall of the well (200) inside which a production tube (206) and a dedicated sealing system (210, 212) of said production tube are inserted so as to guide the gas between the surface on the one hand, and a chimney (220) situated at the inlet of the cavity (201) and with no cemented tubing (204) on the other hand, **characterized in that** it comprises a step for inserting a protective tube (230), then fastening it to the cemented tubing (204) so as to maintain said protective tube (230) in the chimney (220) independently of the production tube (206) and its dedicated sealing system (210, 212).

10. The method according to claim 9, **characterized in that** it comprises a step for testing the dedicated sealing system (210, 212) of the production tube during the installation of said production tube while generating an overpressure between the protective tube (230) and the production tube (206) using an upper seat (234) and sealing means (232) of the protective tube (230).

11. The method according to one of claims 9 or 10, **characterized in that** it comprises the step of protecting a plunger tube, inserted into the well (200) to fill the cavity (201) with gas, using the protective tube (230).
